(19) Europäisches Patentamt
European Patent Office
Office européen des brevets

(11) Veröffentlichungsnummer: **0 272 382 B1**

(12) **EUROPÄISCHE PATENTSCHRIFT**

(45) Veröffentlichungstag der Patentschrift: 08.05.91

(51) Int. Cl.⁵: **F16J 15/12**, F16J 15/10, C09K 3/10, F02F 11/00

(21) Anmeldenummer: 87113232.0

(22) Anmeldetag: 10.09.87

(54) **Weichstoffflachdichtung.**

(30) Priorität: 20.12.86 DE 3643743

(43) Veröffentlichungstag der Anmeldung:
29.06.88 Patentblatt 88/26

(45) Bekanntmachung des Hinweises auf die
Patenterteilung:
08.05.91 Patentblatt 91/19

(84) Benannte Vertragsstaaten:
DE ES FR GB IT

(56) Entgegenhaltungen:
EP-A- 0 226 707          DE-A- 3 245 664
DE-A- 3 317 501          DE-A- 3 431 633
US-A- 3 970 322          US-A- 4 220 342

(73) Patentinhaber: **GOETZE AG**
**Bürgermeister-Schmidt-Strasse 17**
**W-5093 Burscheid 1(DE)**

(72) Erfinder: **Zerfass, Hans-Rainer, Dr.**
**Finkenweg 8**
**W-5093 Burscheid(DE)**
Erfinder: **Giesen, Franz-Josef**
**Am Alten Turm 1a**
**W-5068 Odenthal 3(DE)**

## Beschreibung

Beschreibung:

Die Erfindung betrifft eine Weichstoffflachdichtung, wie insbesondere eine Auspuffflanschdichtung, eine Zylinderkopfdichtung oder eine Nebendichtung Für Verbrennungskraftmaschinen, bestehend aus einem porösen Weichstoffmaterial mit gegebenenfalls Füllstoff- und Bindemittelanteilen sowie einer zweistufigen Imprägnation mit zunächst dem zur Vernetzung erforderlichen Katalysator und anschließend mit einem u.a. Methylhydrogenpolysiloxan enthaltenden flüssigen Silikonharz, das in der einbaufertigen Dichtung vernetzt ist.

Weichstoffzylinderkopfdichtungen bestehen in der Praxis meist aus gegebenenfalls metallisch verstärkten Faservliesmaterialien. Während ursprünglich Asbestfasern im Vliesmaterial verwendet wurden, werden heute mehr oder weniger asbestfreie Faservliese aus meist Gemischen von Fasern organischer oder anorganischer, synthetischer oder natürlicher Herkunft mit Bindemittelanteilen und gegebenenfalls Füllstoffen eingesetzt. Als asbestfreie zylinderkopfdichtungsmeterialien sind inzwischen auch Graphitdichtungen im Einsatz, die aus Graphitfolien-Metallblechlaminaten oder aus Metallplatten mit aufgepreßtem Graphit mit gegebenenfalls Bindemittelanteilen bestehen. Reine Graphitdichtungen kleben allerdings nachteilig an den Dichtflächen der Verbrennungskraftmaschine.

Weichstoffzylinderkopfdichtungen für Verbrennungskraftmaschinen werden ferner auch vor allem zur Verbesserung ihrer Beständigkeit, ihrer Abdichtgüte und ihrer Festigkeit imprägniert, und nach der US-A-3.970,322 bestehen solche Imprägniermittel aus vernetzungsfähigen flüssigen organisch-synthetischen Substancen, die in der einbaufertigen Dichtung thermisch vernetzt sind.

Inzwischen sind auch schon flüssige Siliconharzsysteme bekannt, die bevorzugt unter dem Zusatz von Metallsalzen katalytisch vernetzen. Solche Siliconharzsysteme sind auch schon zum Imprägnieren von Weichstoffflachdichtungen verwendet worden, und aufgrund der überragenden technologischen Eigenschaften erhalten die Dichtungen vor allem eine besonders gute Beständigkeit gegenüber den Abdichtmedien, der Temperatureinwirkung und der Alterung.

Nach der DE-A- 32 45 664 wird als flüssiges Siliconharz ein Polymethylvinylsiloxanharz verwendet, das mit Platinkomplexsalzen unter Polyaddition vernetzt. Dieses Vernetzungssystem ist allerdings gegenüber den als Katalysatorgift wirkenden Aminverbindungen und schwefelabgebenden Verbindungen empfindlich, so daß in diesem Fall schwefel- und aminfreie Dichtungsplatten verwendet werden müssen. Wegen des Kautschukbindemittels in Dichtungsmaterialien können jedoch diese nur aufwendig amin-und schwefelabgabefrei hergestellt werden.

Nach der DE-A- 33 17 501 werden zum Imprägnieren der Dichtungen flüssige Polysiloxane mit vernetzungsfähigen Wasserstoffgruppen, wie Methylhydrogenpolysiloxan, mit Zusatz organischer Schwermetalle als Vernetzungskatalysator verwendet.

Nach dem Vernetzen besitzen derartig imprägnierte Dichtungen noch reaktive Wasserstoffgruppen des Polysiloxans vor allem im Oberflächenbereich, so daß die Dichtungen beim Lagern und dem Transport mit dem Verpackungsmaterial und nach dem Einbau besonders nachteilig mit den Dichtflächen der Verbrennungskraftmaschine verkleben. Nach der DE-A-33 17 501 werden daher diese Dichtungen zusätzlich mit einem kondensationsvernetzenden Polysilozanharz überzogen. Solche Dichtungen kleben nach dem Vernetzen des überzuges nicht mehr, allerdings ist das Herstellungsverfahren dieser Dichtungen aufwendig und teuer und dadurch unwirtschaftlich.

Nach der gemäss Art 54(3) in Betracht zu ziehende EP-A-0226707 hat man zur Vereinfachung schon Zylinderkopfdichtungen mit gemischen von verschieden reagierenden Polysiloxanen imprägniert und man hat den Katalysator schon durch Vorimprägnation zur Topfzeiternhöhung des Imprägniermittelbades direkt in den Weichstoff angebvracht. Diese Dichtungen klebten zwar weniger, allerdings bereitete die gleichmässige Vernetzung des aus unterschiedlichen Polysiloxanen bestehenden Imprägniermittels schwierigkeiten.

Der vorliegenden Erfindung liegt daher die Aufgabe zugrunde, eine Weichstoffflachdichtung mit einer Imprägnation aus einem Polysiloxanharz zu schaffen, die nach dem Vernetzen der Imprägniermittel keine nachteiligen Klebeigenschaften aufweist, und die einfach und kostensparend und dadurch wirtschaftlich herzustellen ist.

Erfindungsgemäß wird diese Aufgabe dadurch gelöst, daß das anschließend in der Dichtung vernetzte Imprägniermittel als vernetzungsfälige komponente ausschliesslich Methylhydrogenpolysiloxan enthält, und daß die Katalystoren aus in Wasser und dem Imprägniermittel unlöslichen organischen Metallsalzen bestehen.

An den fertiggestellten Dichtungen wurde überraschenderweise gefunden, daß diese nicht mehr kleben und in dieser Form voll einsatzfähig waren. Verklebungen mit dem Verpackungsmaterial wurden nicht mehr beobachtet, und das Kleben an den Dichtflächen der Verbrennungskraftmaschine war weitgehend vermieden. Offensichtlich scheinen sich die Katalysatorverbindungen beim Einbringen in das Weichstoffmaterial vor dem eigentlichen Imprägnieren auf den faserigen und feinkörnigen bis pulverigen Weichstoffen fein verteilt abzuscheiden und dadurch eine besondere Oberflächenaktivität zu entfalten. Die anschließende Vernetzung des Imprägniermittels führt dann zu so weit abgesättigten Produkten, daß das vernetzte Imprägniermittel nicht mehr klebt.

Als Katalysatoren werden bevorzugt wasserunlösliche Schwermetallsalze organischer Säuren verwendet, bei denen die Schwermetalle bevorzugt aus Eisen, Zink, Zinn, Kobalt, Blei, Aluminium, Titan und/oder Zirkon bestehen, die mit organischen Säuren zu Stearaten, Octoaten, Mercaptiden oder Maleinaten gebunden sind. Bezogen auf den Weichstoffanteil, sollte der Katalysatoranteil zwischen 0,5 und 5 Gewichtsprozent liegen. Um zu verhindern, daß sich Katalysatoren aus dem Weichstoff im Imprägniermittelbad lösen, sollten die als Katalysatoren verwendeten organischen Schwermetallsalze auch im verwendeten Imprägniermittel unlöslich sein. Auf diese Weise behält vor allem der Dichtungsoberflächenbereich noch ausreichend Vernetzungskatalysatoren, so daß das Imprägniermittel auch hier optimal und nicht mehr klebend vernetzt. Gleichzeitig bleibt das Imprägniermittelbad frei von herausgelösten Katalysatoren und behält eine vorteilhaft lange Verarbeitbarkeitszeit.

Gefunden wurde ferner, daß zur optimale Vernetzung des Imprägniermittels in der Dichtung die Dichtung als Füllstoff bereits solche Metall-Oxide in aktiver, pulveriger bis feinkörniger Form enthalten sollte, die bereits in den organischen Metallsalzen der Katalysatoren vorhanden sind. Bei den bevorzugt als Katalysator verwendeten Zink-, Titan- oder Zirkonsalzen kann der Weichstoff daher bis zu 30 Gewichtsprozent aktives Zinkoxid, Titandioxid oder Zirkondioxid enthalten.

Zum Weichstoff selbst kann der Katalysator bei der Herstellung oder nach der Fertigstellung zugeben werden. Bei Herstellung eines Weichstoffaservlieses aus Faseraufschlämmungen kann der Katalysator schon den Faseraufschlämmungen zugegeben werden. Werden die Dichtungen aus plastischen Fasermassen oder Graphitmischungen gepreßt, so werden die Katalysatoren diesen Massen zugegeben. Im Prinzip können die fertiggestellten Weichstoffplatten aber auch im Lösungen oder Dispersionen der Metallsalzkatalysatoren vor der Polysiloxanimprägnation imprägniert werden.

Durch die Erfindung können somit auf einfache und wirtschaftliche Weise mit Siliconharzen imprägnierte Dichtungen hergestellt werden, die im Oberflächenbereich nicht mit dem Verpackungsmaterial und den Dichtflächen nach dem Einbau verkleben, und die zugleich die vorteilhaften, verbesserten, mechanischen Eigenschaften einer Siliconimprägnierung vor allem in Bezug auf die Beständigkeitswerte und Festigkeitswerte besitzen. Vor allem Graphitdichtungen können so erfolgreich imprägniert werden. Graphitdichtungen ohne Imprägnierung besitzen eine geringe mechanische Stabilität, so daß es bei ihrer Verarbeitung zu Ausbrüchen kommen kann, und gleichzeitig kleben solche nicht imprägnierten Dichtungen nachteilig an den Dichtflächen der Verbrennungskraftmaschinen. Durch die Imprägnation werden die Graphitdichtungen ausreichend fest, so daß sie sich ohne Gefahr von Beschädigungen verarbeiten lassen, und zugleich wird ihr Kleben nach dem Einbau an den Dichtflächen der Verbrennungskraftmaschine weitgehend vermieden.

Das Siliconimprägniermittel besteht aus einem Polymethylhydrogensiloxan mit einer Viskosität von etwa 5 bis 20 mPa.S, und die Imprägnierung kann am Weichstoffdichtungsplattenmaterial vor oder nach dem Ausstanzen der Öffnungen, vor oder nach dem Vereinigen mit der metallischen Verstärkungsplatte und vor oder nach dem Einfassen der Öffnungen durch bevorzugt kurzfristiges Tauchen in das Imprägniermittelbad erfolgen. Die Vernetzung des Imprägniermittels erfolgt dann durch kurzfristiges Erhitzen im Ofen bei etwa 150 bis 250°C. Die fertigen Dichtungen können, falls erforderlich, mit den üblichen Überzügen oder Auflagen aus polymeren Materialien versehen werden, wobei besondere Haftungsprobleme der Auflagen und Überzüge an der Dichtungsoberfläche nicht festgestellt wurden.

Die Erfindung wird durch die Ausführungsbeispiele näher erläutert. Ausgegangen wird:

a) von einem Faservlies aus 15 bis 40 Gewichtsteilen eines Gemisches organischer
und anorganischer Faser

20 bis 50 Gewichtsteilen pyrogener Kieselsäure

5 bis 30 Gewichtsteilen Titandioxid

0 bis 5 Gewichtsteilen aktivem Zinkoxid

1 bis 5 Gewichtsteilen Zinkstearat als Katalysator

3 bis 10 Gewichtsteilen Latexbindemittel

Dadurch, daß das Zinkstearat der Faseraufschlämmung bei der Vleisherstellung zugegeben ist, ist das Zinkstearat fein verteilt auf den Fasern und dem Füllstoff abgeschieden.

Das Faservlies wurde beidseitig auf ein Rauhblech aufgewalzt und zu einer Zylinderkopfdichtung von 3 mm Dicke verarbeitet.

b) von einem Graphitfolienmaterial aus expandiertem Graphit, der fein verteilt 0,5 bis 5 Gewichtsprozent Zinkstearat enthält, welches bei der Folienherstellung zugegeben wurde. Das Graphitfolienmaterial wird beidseitig auf ein Rauhblech so aufgewalzt, daß es 70 % seiner theoretischen Dichte besitzt. Die aus dem Material fertiggestellte Zylinderkopfdichtung besitzt eine Dicke von etwa 3 mm.

Beide Dichtungen wurden mit flüssigem Polymethylhydrogensiloxan mit einer Viskosität von 15

mPa.S durch 2-minütiges Tauchen mit einer Porenfüllung von 90 % imprägniert. Das Imprägniermittel wurde im Ofen bei 230°C während 2 1/2 Minuten vernetzt.

An den imprägnierten Dichtungen wurden im Motortest das Abdichtverhalten, das Fließverhalten und das Klebverhalten bestimmt.

Eine Verschlechterung der Funktionseigenschaften der Dichtungen wurde auch nach längeren Lagerzeiten nicht festgestellt.

## Ansprüche

1. Weichstoffflachdichtung, insbesondere eine Auspuffflanschdichtung, eine Zylinderkopfdichtung oder eine Nebendichtung für Verbrennungskraftmaschinen, bestehend aus einem porösen Weichstoffmaterial mit gegebenenfalls Füllstoff- und Bindemittelanteilen sowie einer zweistufigen Imprägnation mit zunächst dem zur Vernetzung erforderlichen Katalysator und anschließend mit einem u.a. Methylhydrogenpolysiloxan enthaltendem flüssigen Silikonharz, das in der einbaufertigen Dichtung vernetzt ist, dadurch gekennzeichnet, daß das anschließend in der Dichtung vernetzte Imprägniermittel als vernetzungsfähige komponente ausschliesslich Methylhydrogenpolysiloxan enthält und daß die Katalysatoren aus in Wasser und dem Imprägniermittel unlöslichen organischen Metallsalzen bestehen.

2. Weichstoffflachdichtung nach Anspruch 1, dadurch gekennzeichnet, daß der Weichstoff nach der ersten Imprägnationsstufe 0,5 bis 5 Gewichtsprozent Katalysator enthält.

3. Weichstoffflachdichtung nach den Ansprüchen 1 und 2 dadurch gekennzeichnet, daß die Metallsalze aus Stearaten, Octoaten, Mercaptiden und/oder Maleinaten der Metalle Eisen, Zinn, Zink, Kobalt, Blei, Aluminium, Zirkon und/oder Titan bestehen.

4. Weichstoffflachdichtung nach den Ansprüchen 1 bis 3, dadurch gekennzeichnet, daß das Weichstoffmaterial als Füllstoff bis zu 30 Gewichtsprozent des Metalloxids enthält, dessen Metall als organisches Metallsalz als Katalysator im Weichstoff verwendet wird.

5. Weichstoffflachdichtung nach mindestens einem der Ansprüche 1 bis 4, dadurch gekennzeichnet, daß das Weichstoffmaterial aus einem gegebenenfalls füllstoff-oder bindemittelhaltigen Faservlies besteht, dem bei der Herstellung aus Faserstoffaufschlämmungen der Katalysator zugegeben ist.

6. Weichstoffflachdichtung nach mindestehens einem der Ansprüche 1 bis 6, dadurch gekennzeichnet, daß der Weichstoff aus gegebenenfalls bindemitelhaltigen Graphitplatten besteht, denen bei der Herstellung aus Graphit- und gegebenenfalls Bindemittelgemischen der Katalysator zugemischt ist.

## Claims

1. Soft fabric flat packing, in particular an exhaust flange gasket, a cylinder head gasket or a secondary gasket for internal combustion engines, comprising a porous soft fabric material, optionally with filler and binding agent content as well as two-stage impregnation firstly with the catalyst necessary for cross-linking and subsequently with a liquid silicone resin containing, inter alia, methyl hydrogen polysiloxane which is cross-linked in the ready to install packing, characterised in that the impregnating agent subsequently cross-linked in the packing contains as the component capable of cross-linking exclusively methyl hydrogen polysiloxane, and that the catalysts consist of organic metal salts which are insoluble in water and in the impregnating agent.

2. Soft fabric flat packing according to claim 1, characterised in that after the first impregnating stage the soft fabric contains 0,5 to 5 percent by weight catalyst.

3. Soft fabric flat packing according to claims 1 and 2, characterised in that the metal salts consist of stearates, octoates, mercaptides and/or maleinates of the metals iron, tin, zinc, cobalt, lead, aluminium, zirconium and/or titanium.

4. Soft fabric flat packing according to claims 1 to 3, characterised in that the soft fabric material contains as filler up to 30 percent by weight of the metal oxide, the metal of which as an organic metal salt is used as catalyst in the soft fabric.

5. Soft fabric flat packing according to at least one of the claims 1 to 4, characterised in that the soft fabric material consists of a non-woven fabric, optionally containing fillers or binding agents, to which in the manufacture from fibrous suspensions is added the catalyst.

6. Soft fabric flat packing according to at least one of the claims 1 to 5, characterised in that the soft fabric consists of graphite sheets, optionally containing binding agents, to which in the manufacture from graphite and if necessary binding agent mixtures is added the catalyst.

## Revendications

1. Garniture de joint d'étanchéité compressible, en particulier joint d'étanchéité pour bride d'échappement, joint de tête de cylindre ou joint accessoire pour machine à combustion interne, se composant d'une matière compressible poreuse avec le cas échéant des quantités de matériau de remplissage et de liant de même qu'une imprégnation en deux étapes avec, tout d'abord, le catalyseur nécessaire à la réticulation, puis avec une résine de silicone fluide contenant entre autres du méthylhydrogensiloxane qui se réticule dans le joint d'étanchéité prêt à être monté, caracterisé en ce que le matériau d'imprégnation se réticulant ensuite dans le joint contient comme composants susceptibles de réticulation exclusivement du methylhydrogenpolysiloxane et en ce que les catalyseurs se composent de sels métalliques organiques non-solubles dans l'eau et le matériau d'imprégation.

2. Garniture de joint d'étanchéité compressible selon la revendication 1, caractérisé en ce que la matière compressible contient après la première étape de l'imprégnation 0,5 à 5 % en poids de catalyseur.

3. Garniture de joint d'étanchéité compressible selon la revendication 1 ou la revendication 2, caractérisé en ce que les sels métalliques se composent de stéarates, d'octoates, de mercaptides et/ou de maléinates des métaux fer, zinc, étain, cobalt, plomb, aluminium, zircon et/ou titane.

4. Garniture de joint d'étanchéité compressible selon l'une quelconque des revendications 1 à 3, caractérisé en ce que la matière compressible contient comme matériau de remplissage jusqu'à 30 % en poids d'oxydes métalliques dont le métal est utilisé en tant que sel métallique organique comme catalyseur dans la matière compressible.

5. Garniture de joint d'étanchéité compressible selon l'une quelconque des revendications 1 à 4, caractérisé en ce que la matière compressible se compose d'un non-tissé fibré contentant le cas échéant un matériau de remplissage ou un liant et auquel est ajouté le catalyseur lors de la fabrication à partir de suspensions de fibres.

6. Garniture de joint d'étanchéité compressible selon l'une quelconque des revendications 1 à 5, caractérisé en ce que la matière compressible se compose de plaques de graphite contenant le cas échéant un liant auxquelles est mélangé le catalyseur lors de la fabrication à partir de mélanges de graphite et le cas échéant de liant.